# EUROPÄISCHE PATENTSCHRIFT

(11) **EP 3 006 389 B1**
(45) Veröffentlichungstag und Bekanntmachung des Hinweises auf die Patenterteilung: **21.02.2018**
(21) Anmeldenummer: 15188080.4
(22) Anmeldetag: 02.10.2015
(51) Int. Cl.: B66F 9/07, B66F 9/075, B60L 3/00

(54) **REGALBEDIENGERÄT UND VERFAHREN ZUM STEUERN EINES REGALBEDIENGERÄTS**
STACKER CRANE AND METHOD FOR CONTROLLING A STACKER CRANE
TRANSSTOCKEUR ET PROCEDE DE FONCTIONNEMENT D'UN TRANSSTOCKEUR

(30) Priorität: 06.10.2014 DE 102014220165
(43) Veröffentlichungstag der Anmeldung: 13.04.2016
(73) Patentinhaber: viastore systems GmbH, 70469 Stuttgart (DE)
(72) Erfinder: Funk, Otto, 75443 Ötisheim (DE); Dannenhauer, Friedberd, 74193 Schwaigern (DE)
(74) Vertreter: Patentanwälte Ruff, Wilhelm, Beier, Dauster & Partner mbB

(56) Entgegenhaltungen:
- DE-A1- 10 108 909
- DE-A1- 10 258 931
- US-A1- 2003 098 207

## Beschreibung

Die Erfindung betrifft ein Regalbediengerät mit einem Fahrwerk zum Bewegen des Regalbediengeräts entlang einer Fahrbahn in horizontaler Richtung, einem Lastaufnahmemittel zum Aufnehmen von Ladegut aus einem Regal und zum Absetzen von Ladegut in das Regal und einem Hubwerk zum Bewegen des Lastaufnahmemittels entlang einem Mast in vertikaler Richtung, wobei das Fahrwerk, das Lastaufnahmemittel und das Hubwerk jeweils wenigstens einen elektrischen Antriebsmotor aufweisen und wobei eine Steuereinheit zum Ansteuern der elektrischen Antriebsmotoren vorgesehen ist. Die Erfindung betrifft auch ein Verfahren zum Steuern eines Regalbediengeräts.

Aus der US-Offenlegungsschrift US 2003/0098207 A1 ist ein Regalbediengerät mit einem Fahrwerk zum Bewegen des Regalbediengeräts entlang einer Fahrbahn in horizontaler Richtung, einem Lastaufnahmemittel zum Aufnehmen von Ladegut aus einem Regal und zum Absetzen von Ladegut in das Regal und einem Hubwerk zum Bewegen des Lastaufnahmemittels entlang einem Mast in vertikaler Richtung bekannt, wobei das Fahrwerk, das Lastaufnahmemittel und das Hubwerk jeweils wenigstens einen elektrischen Antriebsmotor aufweisen und wobei eine Steuereinheit zum Ansteuern der elektrischen Antriebsmotoren vorgesehen ist. Der elektrische Antriebsmotor für das Hubwerk ist mit einer Bremseinrichtung versehen und das Hubwerk kann über eine Drehung des Antriebsmotors mittels einer Kurbel auch rein mechanisch betrieben werden.

Aus der deutschen Offenlegungsschrift DE 102 58 931 A1 ist ein Flurförderfahrzeug mit einem elektromotorischen Antrieb und einem elektrischen Energiespeicher zur Versorgung des elektromotorischen Antriebs bekannt. Weiter ist eine elektrische Bremse vorgesehen, die von dem elektrischen Energiespeicher versorgt wird. Zusätzlich ist ein Notenergiespeicher vorgesehen, der die elektrische Bremse im Notfall bei einem Ausfall oder einer Unterbrechung der elektrischen Energieversorgung versorgt. Dadurch kann das Flurförderfahrzeug auch bei einem Ausfall der elektrischen Energieversorgung geregelt abgebremst werden. Der Notenergiespeicher kann als Kondensator und/oder Akkumulator ausgebildet sein.

Mit der Erfindung soll ein verbessertes Regalbediengerät und ein verbessertes Verfahren zum Steuern eines Regalbediengeräts geschaffen werden, das in Bezug auf seine Funktionsfähigkeit gegenüber Stromausfällen des Versorgungsnetzes unempfindlich ist.

Erfindungsgemäß ist hierzu ein Regalbediengerät mit den Merkmalen von Anspruch 1 vorgesehen. Erfindungsgemäß sind bei einem Regalbediengerät mit einem Fahrwerk zum Bewegen des Regalbediengeräts entlang einer Fahrbahn in horizontaler Richtung, einem Lastaufnahmemittel zum Aufnehmen von Ladegut, insbesondere aus einem Regal, und zum Absetzen von Ladegut, insbesondere in das Regal, und einem Hubwerk zum Bewegen des Lastaufnahmemittels entlang einem Mast in vertikaler Richtung, wobei das Fahrwerk, das Lastaufnahmemittel und das Hubwerk jeweils wenigstens einen elektrischen Antriebsmotor aufweisen und wobei eine Steuereinheit zum Ansteuern der elektrischen Antriebsmotoren vorgesehen ist, die Antriebsmotoren des Fahrwerks, des Lastaufnahmemittels und des Hubwerks mittels eines Zwischenkreises elektrisch verbunden, und in dem Zwischenkreis ist ein elektrischer Energiespeicher vorgesehen, wobei die Steuereinheit ausgebildet ist, die elektrischen Antriebsmotoren bei einem Ausfall der elektrischen Versorgung aus dem Netz unter Nutzung der mittels des Energiespeichers bereitgestellten elektrischen Energie kontrolliert zum Stillstand abzubremsen.

Durch Vorsehen eines Energiespeichers in dem Zwischenkreis ist es bei dem erfindungsgemäßen Regalbediengerät möglich, unkontrollierte Zustände des Regalbediengeräts bei bzw. nach einem Stromausfall zu vermeiden. Denn durch einen Stromausfall kann ein konventionelles Regalbediengerät unkontrollierte Zustände einnehmen, welche das Gerät oder das Ladegut beschädigen können. Beispielsweise kann es durch einen plötzlichen Stromausfall während des Be- und Entladezyklusses, also während des Aufnehmens von Ladegut aus einem Regal oder dem Absetzen von Ladegut in das Regal, zum Aufsetzen der Gabel auf dem Regal und zum Verlust der Ladung führen. Dies deshalb, da sich nach einem Stromausfall das Hubwerk des Regalbediengeräts üblicherweise um eine Strecke von mehreren Zentimetern abwärts bewegt, bis eine mechanische Bremse einfällt. Diese Bewegung nach einem Stromausfall kann ausreichen, dass das Lastaufnahmemittel auf dem Regal aufsetzt. Bei konventionellen Regalbediengeräten müssen daher nach jedem Stromausfall Stellung und Status des Regalbediengeräts und des Ladeguts überprüft werden, bevor das Regalbediengerät wieder in Betrieb genommen wird. Die Erfindung schafft hier dadurch Abhilfe, dass mittels des Energiespeichers im Zwischenkreis sichergestellt werden kann, dass genügend elektrische Energie vorhanden ist, um nach einem Stromausfall die elektrischen Antriebsmotoren des Fahrwerks, des Lastaufnahmemittels und des Hubwerks kontrolliert zum Stillstand abzubremsen. Dadurch können keine unkontrollierten Zustände des Fahrwerks, des Lastaufnahmemittels und des Hubwerks eintreten, da immer eine kontrollierte elektrische Abbremsung erfolgt und daher auch die Steuereinheit eine Information über die aktuelle, stillstehende Position der elektrischen Antriebsmotoren erhält. Gemäß der Erfindung weisen das Fahrwerk, das Lastaufnahmemittel und das Hubwerk jeweils eine mechanische Bremse auf, wobei die Steuereinheit ausgebildet ist, bei einem Ausfall der elektrischen Versorgung aus dem Netz die mechanischen Bremsen erst dann einzurücken, wenn die Antriebsmotoren kontrolliert zum Stillstand abgebremst sind.

Mit der Erfindung kann auf diese Weise ein erhöhter Verschleiß der mechanischen Motorbremsen vermieden werden. Denn diese Bremsen sind lediglich für den Notfall vorgesehen, nicht aber für die ständige Betätigung. Da erfindungsgemäß die mechanischen Bremsen erst dann eingerückt werden, wenn die Antriebsmotoren kontrolliert zum Stillstand abgebremst sind, wird eine übermäßige Beanspruchung dieser mechanischen Bremsen vermieden.

In Weiterbildung der Erfindung weist der elektrische Energiespeicher Superkondensatoren als Speicher auf.

Da erfindungsgemäß lediglich so viel elektrische Energie zur Verfügung gestellt werden muss, um die elektrischen Antriebsmotoren des Fahrwerks, des Hubwerks und des Lastaufnahmemittels kontrolliert zum Stillstand abzubremsen, können insbesondere ausschließlich Superkondensatoren als elektrische Speicher verwendet werden. Dadurch kann der elektrische Energiespeicher kompakt, wartungsfrei und kostengünstig aufgebaut werden. Überraschenderweise genügt es völlig, in dem Zwischenkreis Superkondensatoren vorzusehen. Diese können unproblematisch während des normalen Netzbetriebs geladen werden und sind, mit der Ausnahme, dass sie aufgeladen werden, während des Normalbetriebs ohne Funktion. Erst bei einem Stromausfall stellen sie die erforderliche Energie bereit, um die Antriebsmotoren kontrolliert zum Stillstand abzubremsen. In überraschend einfacher und kostengünstig zu realisierender Weise kann die Erfindung somit die Unempfindlichkeit eines Regalbediengeräts gegenüber Stromausfällen sicherstellen. Superkondensatoren haben gegenüber gewöhnlichen Kondensatoren eine hohe Speicherkapazität und können dennoch schnell entladen und wieder geladen werden. Der Einsatz von Superkondensatoren als Energiespeicher im Zwischenkreis ist daher sehr vorteilhaft.

In Weiterbildung der Erfindung weist der elektrische Energiespeicher mehrere parallel zum Zwischenkreis geschaltete Superkondensatoren auf. Die Superkondensatoren können somit ohne weitere Steuerungselektronik unmittelbar parallel zum Zwischenkreis geschaltet werden. Die Erfindung kann dadurch in einfacher und kostengünstiger Weise realisiert werden.

Das der Erfindung zugrundeliegende Problem wird auch durch ein Verfahren mit den Merkmalen von Anspruch 4 gelöst. Erfindungsgemäß ist ein Verfahren zum Steuern eines Regalbediengeräts vorgesehen, wobei das Regalbediengerät ein Fahrwerk zum Bewegen des Regalbediengeräts entlang einer Fahrbahn in horizontaler Richtung, ein Lastaufnahmemittel zum Aufnehmen von Ladegut, insbesondere aus einem Regal, und zum Absetzen von Ladegut, insbesondere in das Regal, und ein Hubwerk zum Bewegen des Lastaufnahmemittels entlang einem Mast in vertikaler Richtung aufweist, wobei das Fahrwerk, das Lastaufnahmemittel und das Hubwerk jeweils wenigstens einen elektrischen Antriebsmotor aufweisen und wobei eine Steuereinheit zum Ansteuern der elektrischen Antriebsmotoren vorgesehen ist, wobei die Antriebsmotoren des Fahrwerks, des Lastaufnahmemittels und des Hubwerks mittels eines Zwischenkreises elektrisch verbunden sind und wobei in dem Zwischenkreis ein elektrischer Energiespeicher vorgesehen ist, bei dem bei einem Ausfall der elektrischen Versorgung aus dem Netz die elektrischen Antriebsmotoren des Fahrwerks, des Lastaufnahmemittels und des Hubwerks unter Nutzung der mittels des Energiespeichers bereitgestellten elektrischen Energie kontrolliert zum Stillstand abgebremst werden.

Gemäß der Erfindung weisen das Fahrwerk, das Lastaufnahmemittel und das Hubwerk jeweils eine mechanische Bremse auf, wobei erfindungsgemäß bei einem Ausfall der elektrischen Energie aus dem Netz die mechanischen Bremsen erst dann eingerückt werden, wenn die Antriebsmotoren kontrolliert zum Stillstand abgebremst sind.

In Weiterbildung der Erfindung weist der elektrische Energiespeicher Superkondensatoren als Speicher auf und erfolgt das Aufladen der Superkondensatoren im Normalbetrieb mittels elektrischer Energie aus dem Netz.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Vorderansicht eines erfindungsgemäßen Regalbediengeräts und
- Fig. 2: eine schematische Darstellung des erfindungsgemäßen Regalbediengeräts zur Erläuterung der Erfindung.

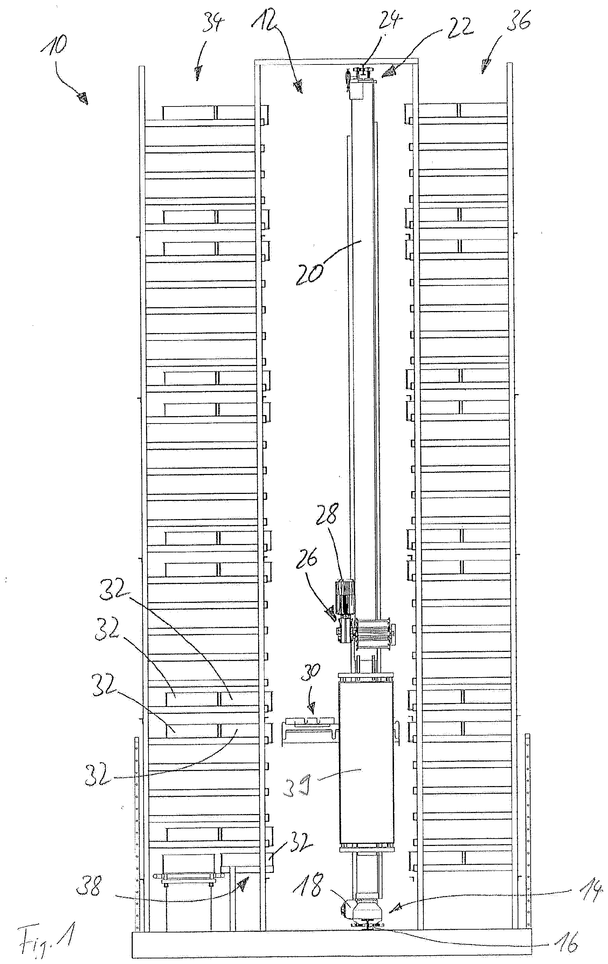

Die Darstellung der Fig. 1 zeigt ein Regallager 10 mit einem erfindungsgemäßen Regalbediengerät 12, wobei die Darstellung der Fig. 1 lediglich zur Erläuterung der einzelnen Komponenten des Regallagers 10 bzw. des Regalbediengeräts 12 dient.

Das Regalbediengerät 12 weist ein Fahrwerk 14 auf, das an einer Fahrbahn 16 in Form einer Doppel-T-förmigen Schiene 16 angreift. Das Fahrwerk 14 weist einen elektrischen Antriebsmotor 18 auf, mit dem das Regalbediengerät 12 in horizontaler Richtung, in Fig. 1 also in die Zeichenebene hinein und aus dieser heraus, bewegt werden kann. Das Fahrwerk bewegt dabei einen Mast 20, an dessen unterem Ende das Fahrwerk 14 vorgesehen ist und der auch an seinem oberen Ende mit einem weiteren Fahrwerk 22 versehen ist, das an einer Führungsschiene 24 angreift. Der Mast 20 wird somit zwischen der oberen Schiene 24 und der unteren, eine Fahrbahn repräsentierenden Schiene 16 gehalten. Es wird dabei sichergestellt, dass der Mast 20 stets im Wesentlichen vertikal angeordnet ist.

Das Regalbediengerät 12 weist weiter ein Hubwerk 26 mit einem elektrischen Antriebsmotor 28 auf. Das Hubwerk 26 sorgt dafür, dass ein Lastaufnahmemittel 30 in vertikaler Richtung, in Fig. 1 also nach oben oder nach unten, entlang dem Mast 20 bewegt werden kann. Das Lastaufnahmemittel 30 ist wiederum dafür vorgesehen, Ladegut 32 aus links und rechts des Regalbediengeräts 12 angeordneten Regalen 34, 36 zu übernehmen bzw. in die Regale 34, 36 einzulagern. Das Lastaufnahmemittel 30 ist weiter dafür vorgesehen, Ladegut 32 von einer Übergabestelle 38 zu übernehmen bzw. auf die Übergabestelle 38 abzusetzen. Von der Übergabestelle 38 kann dann Ladegut 32 aus dem Regallager 10 abtransportiert werden bzw. in das Regallager 10 hineingebracht werden.

Das Lastaufnahmemittel 30 kann sich in an und für sich konventioneller Weise ausgehend vom Mast 20 nach links bzw. rechts bewegen, um Ladegut 32 unmittelbar aus den Regalfächern der Regale 34, 36 zu übernehmen bzw. in diese Regalfächer abzusetzen.

Eine Steuereinheit für die elektrischen Antriebsmotoren ist in einem Schaltschrank 39 angeordnet, der zusammen mit dem Lastaufnahmemittel 30 entlang dem Mast 20 bewegt wird.

Die Regale 34, 36 sind jeweils für eine doppeltiefe Einlagerung ausgelegt und auch das Lastaufnahmemittel ist in der Lage, Ladegut 32 doppelt tief in den Regalen 34, 36 abzulegen.

Das Regalbediengerät 12 wird mit elektrischer Energie aus dem Netz versorgt. Tritt ein Stromausfall auf, während das Lastaufnahmemittel 30 beispielsweise innerhalb eines Regalfachs angeordnet ist, kann der Stromausfall bei einem konventionellen Regalbediengerät dazu führen, dass das Hubwerk 26 einige Zentimeter entlang dem Mast 20 nach unten fährt, bis eine mechanische Bremse am Hubwerk 26 eingreift und das Hubwerk 26 am Mast hält. Auch wenn eine solche Strecke, um die das Hubwerk 26 bei einem Stromausfall nach unten fährt, nur wenige Zentimeter beträgt, so kann diese Strecke doch ausreichend sein, dass das Lastaufnahmemittel an dem Boden eines Regalfachs aufsetzt. Letztendlich kann dies dazu führen, dass Ladegut 32 verloren geht, dass sich das Lastaufnahmemittel 30 verklemmt und dass - allgemein gesprochen - sich eine unkontrollierte Lage des Regalbediengeräts 12 ergibt. Denn auch für das Abbremsen der elektrischen Antriebsmotoren ist eine geringe elektrische Energie notwendig, um in den Bremsbetrieb oder Generatorbetrieb überzugehen.

Auch in dem Fall, wenn das Lastaufnahmemittel 30 nicht innerhalb eines Regalfachs angeordnet ist und sich beispielsweise das Hubwerk 26 und/oder das Fahrwerk 14 mit hoher Geschwindigkeit entlang dem Mast 20 bzw. entlang der Fahrbahn 16 bewegen, führt ein Stromausfall bei einem konventionellen Regalbediengerät dazu, dass eine mechanische Bremse sowohl am Fahrwerk 14 als auch am Hubwerk 26 einrückt und dadurch das Regalbediengerät 12 zum Stillstand bringt. Die mechanischen Bremsen am Fahrwerk 14 sowie am Hubwerk 26 sind aber lediglich für den Notfall, nicht aber für die ständige Betätigung ausgelegt. Tritt nun, aufgrund einer schlechten elektrischen Energieversorgung, mehrmals täglich ein Stromausfall auf, so werden bei konventionellen Regalbediengeräten die mechanischen Bremsen am Fahrwerk 14, am Hubwerk 26 sowie auch am Lastaufnahmemittel 30 überbeansprucht und verschleißen schnell.

Bevor das Regallager 10 bzw. das Regalbediengerät 12 nach einem Stromausfall wieder in Betrieb genommen werden kann, muss daher bei konventionellen Regallagern zunächst geprüft werden, ob das Lastaufnahmemittel 30 nicht an den Regalen 34, 36 anliegt und/oder ob gegebenenfalls Ladegut 32 verkippt ist oder bereits verloren wurde. Da die Regale 34, 36 bis zu 40 Meter hoch sein können, verursacht dies erhebliche Stillstandszeiten.

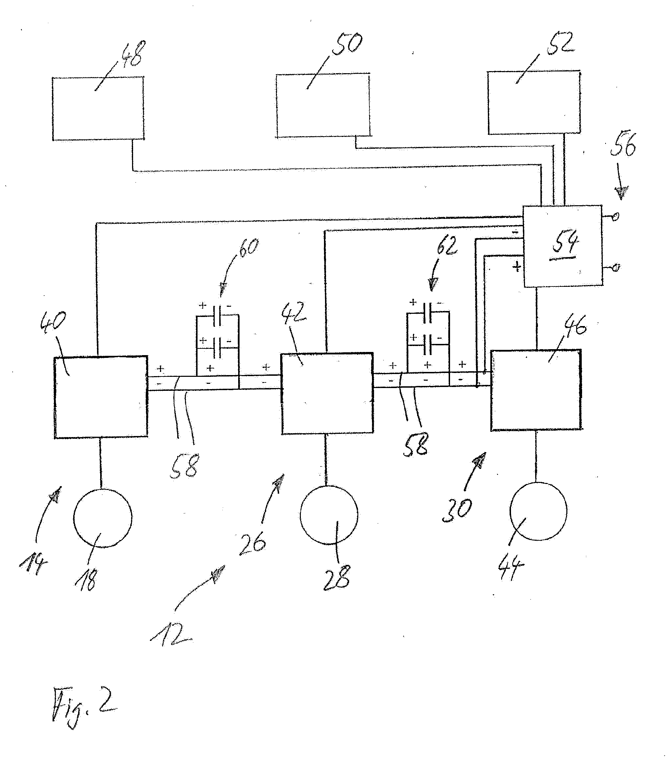

Bei dem erfindungsgemäßen Regalbediengerät 12 sind daher Maßnahmen getroffen worden, um ein kontrolliertes Abbremsen der Antriebsmotoren 18, 28 am Fahrwerk 14, am Hubwerk 26 sowie am Lastaufnahmemittel 30 bei einem Stromausfall sicherzustellen, die anhand von Fig. 2 erläutert werden.

Fig. 2 stellt in schematischer Weise das Regalbediengerät 12 dar. Das Fahrwerk 14 weist, wie bereits erläutert wurde, den Antriebsmotor 18 sowie eine Steuerung 40 für den Antriebsmotor 18 auf. Das Hubwerk 26 weist den Antriebsmotor 28 sowie ebenfalls eine Steuerung 42 für den Antriebsmotor 28 auf. Das Lastaufnahmemittel 30 ist mit einem Antriebsmotor 44 und einer Steuerung 46 für den Antriebsmotor 44 versehen. Dem Antriebsmotor 18 des Fahrwerks 14 ist eine mechanische Bremse 48 zugeordnet. Dem Antriebsmotor 28 des Hubwerks 26 ist eine mechanische Bremse 50 zugeordnet und dem Antriebsmotor 44 des Lastaufnahmemittels 30 ist eine mechanische Bremse 52 zugeordnet. Eine zentrale Steuerung 54 ist mit den Steuerungen 40, 42, 46 für die elektrischen Antriebsmotoren 18, 28, 44 sowie auch mit den mechanischen Bremsen 48, 50, 52 verbunden. Auch die elektrische Energieversorgung von einem Netz 56 wird über die zentrale Steuerung 54 geführt. Die Steuerung 54 kann somit detektieren, wenn die elektrische Energieversorgung vom Netz 56 ausfällt.

Die Steuerungen 40, 42, 46 und damit die elektrischen Antriebsmotoren 18, 28, 44 sind über einen Zwischenkreis 58 elektrisch miteinander verbunden. Bei der dargestellten Ausführungsform wird dieser Zwischenkreis 58 über die Steuerung 54 mit Gleichspannung versorgt. Der Zwischenkreis 58 dient zur parallelen elektrischen Versorgung der Motoren 18, 28, 44. Über einen solchen Zwischenkreis 58 können die Motoren 18, 28, 44 energieeffizient betrieben werden. Schaltet beispielsweise der Motor 28 in den Generatorbetrieb, da das Hubwerk 26 eine Last entlang dem Mast 20 absenkt, wird die dadurch generierte elektrische Energie in den Zwischenkreis 58 zurückgespeist. Das Fahrwerk 14 bzw. der Antriebsmotor 18 kann dann diese elektrische Energie nutzen, um selbst zu beschleunigen.

Parallel zum Zwischenkreis 58 sind mehrere Superkondensatoren 60, 62 geschaltet. Speziell sind zwischen den Steuerungen 40, 42 parallel zum Zwischenkreis 58 zwei Superkondensatoren 60 und zwischen den Steuerungen 42 und 46 weitere zwei Superkondensatoren 62 parallel zum Zwischenkreis 58 geschaltet. Die Darstellung der Fig. 2 ist aber, wie ausgeführt wurde, lediglich schematisch, so dass Anordnung und Anzahl der Superkondensatoren 60, 62 im Rahmen der Erfindung verändert werden kann.

In einem Normalbetrieb, in dem die elektrische Versorgung der Antriebsmotoren 18, 28 und 44 über das Netz 56 erfolgt, werden die Superkondensatoren 60, 62 geladen. Mit Ausnahme dieser Ladefunktion haben die Superkondensatoren 60, 62, die zusammen einen Energiespeicher im Zwischenkreis 58 bilden, keine weitere Funktion. Alternativ können die Superkondensatoren 60, 62 oder allgemein ein Energiespeicher, Rekuperationsenergie aus Bremsvorgängen speichern und wieder abgeben, wodurch sich die Energiebilanz des Regalbediengeräts verbessert.

Erst dann, wenn das Netz 56 ausfällt und somit von der zentralen Steuerung 54 keine elektrische Energie mehr in den Zwischenkreis 58 eingespeist werden kann, können die Superkondensatoren 60, 62 die Steuerungen 40, 42, 46 und damit die jeweils zugeordneten elektrischen Antriebsmotoren 18, 28, 44 noch für eine bestimmte Zeit mit elektrischer Energie weiterversorgen. Es ist dadurch möglich, die elektrischen Antriebsmotoren 18, 28, 44 auch im Falle eines Ausfalls des Netzes 56 kontrolliert zum Stillstand zu bringen. Dadurch werden unkontrollierte Stellungen des Fahrwerks 14, des Hubwerks 26 und des Lastaufnahmemittels 30 bei einem Stromausfall vermieden.

Bei dem erfindungsgemäßen Verfahren wird somit durch die zentrale Steuerung 54 geprüft, ob das Netz 56 elektrische Energie liefert oder ob ein Stromausfall vorliegt. Wird ein Ausfall des Netzes 56 detektiert, gibt die zentrale Steuerung 54 an die Steuerungen 40, 42, 46 für die elektrischen Antriebsmotoren 18, 28, 44 den Befehl, die elektrischen Antriebsmotoren 18, 28, 44 kontrolliert zum Stillstand zu bringen. Dies erfolgt in einer Weise, dass keine übermäßigen Beschleunigungen auftreten, das Abbremsen der Motoren 18, 28, 44 somit ruckbegrenzt erfolgt. Dadurch besteht nicht das Risiko, dass eventuell auf dem Lastaufnahmemittel 30 befindliches Ladegut 32 verrutscht. Das kontrollierte Abbremsen der Antriebsmotoren 18, 28, 44 ist möglich, da die Superkondensatoren 60, 62 dem Zwischenkreis 58 noch ausreichend elektrische Energie für diesen Bremsvorgang zur Verfügung stellen, so dass also ein Bremsbetrieb oder Generatorbetrieb eingestellt werden kann.

Sobald die Motoren 18, 28, 44 stillstehen und somit eine Geschwindigkeit von 0 m/s erreicht haben, gibt die zentrale Steuerung 54 an die mechanischen Bremsen 58, 50, 52 den Befehl aus, einzurücken. Das Eingreifen der mechanischen Bremsen 48, 50, 52 erfolgt somit erst dann, wenn die Motoren 18, 28, 44 vollständig zum Stillstand abgebremst sind. An den mechanischen Bremsen 48, 50, 52 tritt dadurch kein nennenswerter Verschleiß auf.

Da auch bei einem Ausfall des Netzes 56 in der beschriebenen Art und Weise die Antriebsmotoren 18, 28, 44 kontrolliert und ruckbegrenzt zum Stillstand abgebremst werden, ist sichergestellt, dass das Fahrwerk 14, das Hubwerk 26 und das Lastaufnahmemittel 30 auch nach einem Stromausfall eine kontrollierte und definierte Stellung einnehmen und vor allem auch die zentrale Steuerung 54 Kenntnis über die aktuelle Stellung des Fahrwerks 14, des Hubwerks 26 und des Lastaufnahmemittels 30 hat. Da das Abbremsen der Antriebsmotoren 18, 28, 44 ruckbegrenzt erfolgt, ist gleichzeitig sichergestellt, dass Ladegut 32, siehe Fig. 1, auf dem Lastaufnahmemittel 30 nicht verrutscht ist.

Sobald das elektrische Netz 56 wieder zur Verfügung steht, kann dadurch ohne weitere Kontrollen des Fahrwerks 14, des Hubwerks 26 und des Lastaufnahmemittels 30 wieder der Normalbetrieb aufgenommen werden, nachdem die mechanischen Bremsen 48, 50, 52 gelöst wurden.

Mit dem erfindungsgemäßen Regalbediengerät 12 lassen sich somit Stillstandszeiten im Wesentlichen auf die Zeit des Stromausfalls begrenzen, da nach Wiederzurverfügungstehen des elektrischen Netzes 56 unmittelbar mit dem Normalbetrieb begonnen werden kann.

## Patentansprüche

1. Regalbediengerät (12) mit einem Fahrwerk (14) zum Bewegen des Regalbediengeräts (12) entlang einer Fahrbahn (16) in horizontaler Richtung, einem Lastaufnahmemittel (30) zum Aufnehmen von Ladegut (32) und zum Absetzen von Ladegut (32) und einem Hubwerk (26) zum Bewegen des Lastaufnahmemittels (30) entlang einem Mast (20) in vertikaler Richtung, wobei das Fahrwerk (14), das Lastaufnahmemittel (30) und das Hubwerk (26) jeweils wenigstens einen elektrischen Antriebsmotor (18, 44, 28) aufweisen und wobei eine Steuereinheit (54) zum Ansteuern der elektrischen Antriebsmotoren (18, 44, 28) vorgesehen ist, **dadurch gekennzeichnet, dass** die Antriebsmotoren (18, 44, 28) des Fahrwerks (14), des Lastaufnahmemittels (30) und des Hubwerks (26) mittels eines Zwischenkreises (58) elektrisch verbunden sind, dass in dem Zwischenkreis (58) ein elektrischer Energiespeicher vorgesehen ist, wobei die Steuereinheit (54) ausgebildet ist, die elektrischen Antriebsmotoren (18, 44, 28) bei einem Ausfall der elektrischen Versorgung aus dem Netz (56) unter Nutzung der mittels des Energiespeichers bereitgestellten elektrischen Energie kontrolliert zum Stillstand abzubremsen und
dass das Fahrwerk (14), das Lastaufnahmemittel (30) und das Hubwerk (26) jeweils eine mechanische Bremse (48, 52, 50) aufweisen, wobei die Steuereinheit (54) ausgebildet ist, bei einem Ausfall der elektrischen Versorgung aus dem Netz (56) die mechanischen Bremsen (48, 52, 50) erst dann einzurücken, wenn die Antriebsmotoren (18, 44, 28) kontrolliert zum Stillstand abgebremst sind.

2. Regalbediengerät nach Anspruch 1, **dadurch gekennzeichnet, dass** der elektrische Energiespeicher Superkondensatoren (60, 62) als Speicher aufweist.

3. Regalbediengerät nach wenigstens einem der vorstehenden Ansprüche, **dadurch gekennzeichnet, dass** der elektrische Energiespeicher mehrere parallel zum Zwischenkreis geschaltete Superkondensatoren (60, 62) aufweist.

4. Verfahren zum Steuern eines Regalbediengeräts (12), wobei das Regalbediengerät (12) ein Fahrwerk (14) zum Bewegen des Regalbediengeräts (12) entlang einer Fahrbahn (16) in horizontaler Richtung, ein Lastaufnahmemittel (30) zum Aufnehmen von Ladegut (32) und zum Absetzen von Ladegut (32) und ein Hubwerk (26) zum Bewegen des Lastaufnahmemittels (30) entlang einem Mast (20) in vertikaler Richtung aufweist, wobei das Fahrwerk (14), das Lastaufnahmemittel (30) und das Hubwerk (26) jeweils wenigstens einen elektrischen Antriebsmotor (18, 44, 28) aufweisen und wobei eine Steuereinheit (54) zum Ansteuern der elektrischen Antriebsmotoren (18, 44, 28) vorgesehen ist, wobei die Antriebsmotoren (18, 44, 28) des Fahrwerks (14), des Lastaufnahmemittels (30) und des Hubwerk (26) mittels eines Zwischenkreises (58) elektrisch verbunden sind und wobei in dem Zwischenkreis (58) ein elektrischer Energiespeicher vorgesehen ist, **dadurch gekennzeichnet, dass** bei einem Ausfall der elektrischen Versorgung aus dem Netz (56) die elektrischen Antriebsmotoren (18, 44, 28) des Fahrwerks (14), des Lastaufnahmemittels (30) und des Hubwerks (26) unter Nutzung der mittels des Energiespeichers bereitgestellten elektrischen Energie kontrolliert zum Stillstand abgebremst werden, wobei das Fahrwerk (14), das Lastaufnahmemittel (30) und das Hubwerk (26) jeweils eine mechanische Bremse (48, 52, 50) aufweisen, **dadurch gekennzeichnet, dass** bei einem Ausfall der elektrischen Energie aus dem Netz (56) die mechanischen Bremsen (48, 52, 50) erst dann eingerückt werden, wenn die Antriebsmotoren (18, 44, 28) kontrolliert zum Stillstand abgebremst sind.

5. Verfahren nach Anspruch 4, **dadurch gekennzeichnet, dass** der elektrische Energiespeicher Superkondensatoren (60, 62) als Speicher aufweist und dass das Aufladen der Superkondensatoren (60, 62) im Normalbetrieb mittels elektrischer Energie aus dem Netz (56) erfolgt.

## Claims

1. Storage/retrieval unit (12) having a chassis (14) for moving the storage/retrieval unit (12) along a carriageway (16) in the horizontal direction, a load handling means (30) for picking up cargo (32) and for setting down cargo (32), and a lifting unit (26) for moving the load handling means (30) along a mast (20) in the vertical direction, wherein the chassis (14), the load handling means (30) and the lifting unit (26) each include at least one electric drive motor (18, 44, 28), and wherein a control unit (54) is provided for controlling the electric drive motors (18, 44, 28), **characterized in that** the drive motors (18, 44, 28) of the chassis (14), the load handling means (30) and the lifting unit (26) are electrically connected using an intermediate circuit (58), **in that** an electric energy storage device is provided in the intermediate circuit (58), wherein the control unit (54) is configured, in case of a failure of the electric power supply from the mains (56), to slow down the electric drive motors (18, 44, 28) to a standstill in a controlled manner using the electric power provided by the energy storage device; and
**in that** the chassis (14), the load handling means (30) and the lifting unit (26) each include a mechanical brake (48, 52, 50), wherein the control unit (54) is configured, in case of a failure of the electric power supply from the mains (56), to engage the mechanical brakes (48, 52, 50) only when the drive motors (18, 44, 28) have been slowed down to a standstill in a controlled manner.

2. Storage/retrieval unit according to claim 1, **characterized in that** the electric energy storage device includes super capacitors (60, 62) as storage means.

3. Storage/retrieval unit according to at least one of the preceding claims, **characterized in that** the electric energy storage device includes a plurality of super capacitors (60, 62) connected in parallel to an intermediate circuit.

4. Method for controlling a storage/retrieval unit (12), wherein the storage/retrieval unit (12) includes a chassis (14) for moving the storage/retrieval unit (12) along a carriageway (16) in the horizontal direction, a load handling means (30) for picking up cargo (32) and for setting down cargo (32), and a lifting unit (26) for moving the load handling means (30) along a mast (20) in the vertical direction, wherein the chassis (14), the load handling means (30) and the lifting unit (26) each include at least one electric drive motor (18, 44, 28), and wherein a control unit (54) is provided for controlling the electric drive motors (18, 44, 28), wherein the drive motors (18, 44, 28) of the chassis (14), the load handling means (30) and the lifting unit (26) are electrically connected using an intermediate circuit (58), and wherein an electric energy storage device is provided in the intermediate circuit (58), **characterized in that**, in case of a failure of the electric power supply from the mains (56), the electric drive motors (18, 44, 28) of the chassis (14), the load handling means (30) and the lifting unit (26) are slowed down to a standstill in a controlled manner using the electric power provided by the energy storage device, wherein the chassis (14), the load handling means (30) and the lifting unit (26) each include a mechanical brake (48, 52, 50), **characterized in that**, in case of a failure of the electric power from the mains (56), the mechanical brakes (48, 52, 50) are engaged only when the drive motors (18, 44, 28) have been slowed down to a standstill in a controlled manner.

5. Method according to claim 4, **characterized in that** the electric energy storage device includes super capacitors (60, 62) as storage means, and **in that** charging the super capacitors (60, 62) is by means of electric power from the mains (56) in the normal operation mode.

## Revendications

1. Transstockeur (12) doté d'un train de roulement (14) qui déplace le transstockeur (12) le long d'une piste de déplacement (16) qui s'étend à l'horizontale, d'un moyen (30) de reprise de charge qui reprend une charge (32) et dépose la charge (32) et d'un mécanisme de levage (26) qui déplace le moyen (30) de reprise de charge dans la direction verticale le long d'un mât (20), le train de roulement (14), le moyen (30) de reprise de charge et le mécanisme de levage (26) présentant chacun au moins un moteur électrique d'entraînement (18, 44, 28), une unité de commande (54) étant prévue pour commander les moteurs électriques d'entraînement (18, 44, 28), **caractérisé en ce que** les moteurs d'entraînement (18, 44, 28) du train de roulement (14), du moyen (30) de reprise de charge et du mécanisme de levage (26) sont reliés électriquement au moyen d'un circuit intermédiaire (58), **en ce qu'**un accumulateur d'énergie électrique est prévu dans le circuit intermédiaire (58), l'unité de commande (54) étant configurée pour freiner de manière contrôlée jusqu'à l'arrêt les moteurs électriques d'entraînement (18, 44, 28) en cas de défaillance de l'alimentation électrique par le réseau (56) en recourant à l'énergie électrique délivrée par l'accumulateur d'énergie et
**en ce que** le train de roulement (14), le moyen (30) de reprise de charge et le mécanisme de levage (26) présentent tous des freins mécaniques (48, 52, 50), l'unité de commande (54) étant configurée pour n'activer les freins mécaniques (48, 52, 50) en cas de défaillance de l'alimentation électrique par le réseau (56) que si les moteurs d'entraînement (18, 44, 28) ont été freinés de manière contrôlée jusqu'à l'arrêt.

2. Transstockeur selon la revendication 1, **caractérisé en ce que** l'accumulateur d'énergie électrique présente comme accumulateurs des super-condensateurs (60, 62).

3. Transstockeur selon au moins l'une des revendications précédentes, **caractérisé en ce que** l'accumulateur d'énergie électrique présente plusieurs super-condensateurs (60, 62) raccordés en parallèle au circuit intermédiaire.

4. Procédé de commande d'un transstockeur (12), le transstockeur (12) présentant un train de roulement (14) qui déplace le transstockeur (12) le long d'une piste de déplacement (16) qui s'étend à l'horizontale, un moyen (30) de reprise de charge qui reprend une charge (32) et dépose la charge (32) et un mécanisme de levage (26) qui déplace le moyen (30) de reprise de charge dans la direction verticale le long d'un mât (20), le train de roulement (14), le moyen (30) de reprise de charge et le mécanisme de levage (26) présentant chacun au moins un moteur électrique d'entraînement (18, 44, 28), une unité de commande (54) étant prévue pour commander les moteurs électriques d'entraînement (18, 44, 28), les moteurs d'entraînement (18, 44, 28) du train de roulement (14), du moyen (30) de reprise de charge et du mécanisme de levage (26) étant reliés électriquement au moyen d'un circuit intermédiaire (58), un accumulateur d'énergie électrique étant prévu dans le circuit intermédiaire (58), **caractérisé en ce que** en cas de défaillance de l'alimentation électrique par le réseau (56), les moteurs électriques d'entraînement (18, 44, 28) du train de roulement (14), du moyen (30) de reprise de charge et du mécanisme de levage (26) sont freinés de manière contrôlée jusqu'à l'arrêt en recourant à l'énergie électrique délivrée par l'accumulateur d'énergie, le train de roulement (14), le moyen (30) de reprise de charge et le mécanisme de levage (26) présentant chacun un frein mécanique (48, 52, 50), **caractérisé en ce que** en cas de défaillance de l'alimentation électrique par le réseau (56), les freins mécaniques (48, 52, 50) ne sont activés que si les moteurs d'entraînement (18, 44, 28) ont été freinés de manière contrôlée jusqu'à l'arrêt.

5. Procédé selon la revendication 4, **caractérisé en ce que** l'accumulateur d'énergie électrique présente comme accumulateurs des super-condensateurs (60, 62) et **en ce qu'**en fonctionnement normal, la charge des super-condensateurs (60, 62) s'effectue au moyen d'énergie électrique délivrée par le réseau (56).
